# EUROPÄISCHE PATENTSCHRIFT

(11) **EP 0 848 789 B1**
(45) Veröffentlichungstag und Bekanntmachung des Hinweises auf die Patenterteilung: **16.07.2003**
(21) Anmeldenummer: 97937528.4
(22) Anmeldetag: 30.07.1997
(51) Int. Cl.: F16C 1/22

(54) **AUSGLEICHSELEMENT FÜR EINE ZUG- UND DRUCKSTANGE**
COMPENSATING ELEMENT FOR A PULLING AND PRESSING ROD
ELEMENT DE COMPENSATION POUR TIGE DE TRACTION ET DE PRESSION

(30) Priorität: 30.07.1996 DE 19630585; 04.02.1997 DE 19704053
(43) Veröffentlichungstag der Anmeldung: 24.06.1998
(73) Patentinhaber: KÜSTER & Co. GmbH, 35630 Ehringshausen (DE)
(72) Erfinder: GUTIERREZ, Carmelo, D-35630 Ehringshausen (DE); MORITZ, Reiner, D-35630 Ehringshausen (DE); HENRICH, Willi, D-35630 Ehringshausen (DE)
(74) Vertreter: Müller, Eckhard, Dr.
(86) Internationale Anmeldenummer: EP9704131
(87) Internationale Veröffentlichungsnummer: WO98004843

(56) Entgegenhaltungen:
- EP-A- 0 743 463
- CH-A- 375 178
- DE-A- 3 103 698
- DE-A- 3 531 200
- DE-A- 3 533 405
- DE-A- 4 336 221
- DE-A- 19 618 422
- GB-A- 1 056 796
- US-A- 4 793 206
- US-A- 4 829 845

## Beschreibung

Die Erfindung bezieht sich auf eine Ausgleichsvorrichtung für eine Zug- und Druckstange gemäß dem Oberbegriff des Anspruchs 1.

Derartige Zug- und Druckstangen werden beispielsweise bei Kraftfahrzeuggetrieben eingesetzt, um Schalt- und Wahlvorgänge auszuführen. Üblicherweise ist an der Zug- und Druckstange ein Betätigungszug angelenkt, welcher zu dem entsprechenden Geber, beispielsweise einem Wähl- und Schalthebel, oder zu dem Getriebe führt. Um einen Längenausgleich, z.B. zum Ausgleich von Toleranzen, vornehmen zu können, ist es bekannt, bei derartigen Zug- und Druckstangen die Länge der Stange in Stufen über ein Verzahnung und eine Gegenverzahnung mit zusätzlichen Verriegelungs- und Entriegelungselementen einzustellen. Nachteilig dabei ist, dass nur in Stufen verstellt werden kann, so dass Zwischenstellungen nicht eingenommen werden können. Ein weiterer Nachteil bei den bekannten Zug- und Druckstangen ist, dass die Anlieferung an den Einbauort, z.B. das Band des Kraftfahrzeugherstellers, komplett mit Betätigungszug erfolgen muß. Der Betätigungszug ist dabei also voreingestellt, was jedoch zumeist erfordert, dass der Bandarbeiter eine Nacheinstellung auf das gerade erforderliche Längenmaß durchführen muß. Dies ist häufig mit einem relativ großen Arbeitsaufwand (Öffnen der Verriegelungselemente, Verstellen, Schließen der Verriegelungselemente) verbunden.

Aus der DE-A-3531200, von der der Obergriff des Anspruches 1 ausgeht, ist eine Ausgleichsvorrichtung mit einer Doppelfeder bekannt, die aus zwei gleichsinnig über einander gewickelten Schraubenfeder besteht.

Aus der DE-A-31 03 698 ist ferner eine mechanische Reibungsverriegelung bekannt, welche die Axialbewegung eines Stabes gegenüber einem Gehäuse verhindert und die Bewegung nach dem Entriegeln durch eine Bedienungsperson ermöglicht. Hierzu ist eine Schraubenfeder vorgesehen, die den Stab koaxial umfaßt, wobei der Durchmesser des Stabes etwas größer als der Innendurchmesser der nicht auf dem Stab angebrachten Feder ist. Normalerweise klemmt die Schraubenfeder daher den Stab fest ein, wenn sie auf diesem angeordnet ist. Weiterhin ist eine Freigabeeinrichtung vorgesehen, die an einem Ende der Schraubenfeder angreift und mit der die Schraubenfeder aufgebogen werden kann, so dass der Stab innerhalb der Schraubenfedern axial verschiebbar angeordnet ist.

Aus der WO-A-97 18978 bzw. der DE-A-197 18 422 ist eine Vorrichtung zur selbsttätigen Längenkorrektur von Seilzügen bekannt, mit einer eine Aufnahme aufweisenden Hülse und einer in der Aufnahme verschiebbar geführten Zahnstange. Die Hülse weist eine Anlenkung für einen Geber auf, wobei die Zahnstange über einen Seilzug mit einem Nehmer gekoppelt ist. Bei einer Aktivierung des Gebers sind die Hülse und die Zahnstange mittels eines Gesperres miteinander koppelbar. Bei einer Deaktivierung des Gebers ist die mit einer Vorspannung beaufschlagte Zahnstange zur Kompensation etwaiger im System vorhandener Lose bzgl. der Hülse in Richtung einer Verkürzung der Vorrichtung verschiebbar. Das Gesperre weist Sperrsegmente auf, die in einer Konuskammer der Hülse gleitend geführt sind und mittels einer Vorspannung, bspw. einer Druckfeder, in eine Sperrstellung bzgl. der Zahnstange beaufschlagt sind. Die Sperrsegmente besitzen Rastzähne, die in der Sperrstellung des Gesperres in eine Gegenzahnung der Zahnstange eingreifen.

Demgegenüber liegt der vorliegenden Erfindung die Aufgabe zugrunde, eine Ausgleichsvorrichtung der eingangs genannten Art dahingehend weiterzubilden, dass hohe Zug-/Druck-Kräfte übertragen werden können und eine nur geringere Drehbewegung zum Öffnen bzw. Schließen des Schraubenfedermittels erforderlich sind.

Diese Aufgabe wird erfindungsgemäß dadurch gelöst, dass im Gehäuse gegenläufig gerichtete Schraubenfedern vorgesehen sind, durch deren Inneres die Zug- und Druckstange gesteckt werden kann. Die Klemmung der Zug- und Druckstange im Ausgleichselement erfolgt dadurch, dass der Innendurchmesser der entspannten Federn kleiner ist als der Außendurchmesser der Zug- und Druckstange oder dass die Feder ein zwischen ihr und der Zug- und Druckstange befindliches Element auf diese drückt. Der Vorteil des Einsatzes zweier gegenläufig gewickelter Federn besteht auch darin, dass hohe Zug-/Druck-Kräfte auch bei kleinen Durchmessern übertragen werden können und eine nur geringe Drehbewegung des Einstellstücks zum Öffnen bzw. Schließen der Federn erforderlich ist. Zum Einstecken der Zug- und Druckstange werden die Federn z.B. durch Verdrehen um ihre eigene Achse aufgebogen. Sie vergrößert dadurch ihren Innendurchmesser und erlaubt ein Einschieben der Zug- und Druckstange. Läßt man die Feder los, verringert sie wieder ihren Durchmesser und klemmt die Zugund Druckstange fest. Zum leichteren Aufspreizen der Feder ist ein Einstellstück vorgesehen, das mit den Enden der Schraubenfedern fest verbunden ist und nach außen reicht. Der Mechaniker kann das Einstellstück einfach gegenüber dem Gehäuse verdrehen, was mit dem Daumen der das Gehäuse haltenden Hand durchgeführt werden kann, und die Zug- und Druckstange auf die entsprechende Länge einschieben. Durch Loslassen der Einstellung umschließen oder umpressen die Federn die Zug- und Druckstange und halten diese in der vorgesehenen Lage und damit das gesamte Betätigungselement in der gewünschten Länge.

Zusätzlich zu dieser Klemmwirkung der Schraubenfeder können in dem Ausgleichselement ein oder mehrere Klemmelemente vorgesehen sein, die der Schraubenfeder zugewandte Anlaufschrägen oder Widerlager aufweisen. Die Zug und Druckstange wird direkt von den Federn mit dem kleineren Innendurchmesser gehalten. Wirkt eine Zug- oder Druckbeanspruchung auf die Stange, so werden die Federn gegen die Anlaufschrägen der Klemmelemente gedrückt und bewirkt dadurch eine weitere Durchmesserreduzierung des entsprechenden Federganges. Dadurch wird die Klemmkraft des erfindungsgemäßen Ausgleichselements nochmals erhöht.

Weitere Vorteile und Anwendungsmöglichkeiten der vorliegenden Erfindung ergeben sich aus der nachfolgenden Beschreibung der Ausführungsbeispiele an Hand der Zeichnung.

Es zeigen:
- Figuren 1 bis 4: eine erste Ausführungsform eines erfindungsgemäßen Ausgleichselements vor dem Zusammenbau, beim Zusammenbau, bei Druckbelastung und bei Zugbelastung und
- Figuren 5 bis 7: eine abgewandelte Ausführungsform des erfindungsgemäßen Ausgleichselementes gemäß Figuren 1 bis 4.

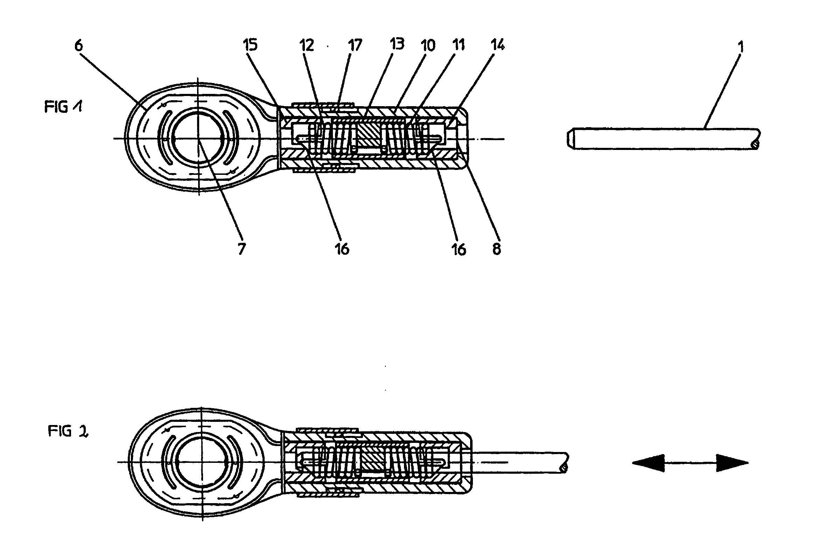

In den Figuren 1 bis 4 ist eine erste Ausführungsform dargestellt, wobei die Anlenkung an das Kraftfahrzeuggetriebe oder das andere zu betätigende Organ ebenfalls mit dem Bezugszeichen 6 für die Anbindung bezeichnet ist. Mit der Anbindung 6 verbunden ist ein rohrförmiges Gehäuse 10. Innerhalb des rohrförmigen Gehäuses 10 finden sich hier zwei gegenläufig gewickelte Federn 11 und 12, zwischen welchen ein Einstellstück 13 angeordnet ist. Dabei sind die jeweils inneren Federenden an dem Einstellstück 13 angelenkt. Die jeweils äußeren Federenden sind an zwei Klemmelementen 14 und 15 gehalten, welche drehfest innerhalb des Gehäuses 10 aufgenommen sind. Das Einstellstück 13 weist einen - in der Figur nicht näher dargestellten - radial nach außen weisenden Hebel oder Knopf auf, mittels welchem das Einstellstück 13 von außen verdrehbar ist. Die Federn 11 und 12 haben in ihrer Ruhestellung einen Innendurchmesser, der kleiner ist als der Durchmesser der einzufügenden Zug- und Druckstange 1. Beim Verdrehen des Einstellstücks 13 gegen die Kraft der beiden Federn 11 und 12 weiten diese sich radial nach außen auf, so dass die Zug- und Druckstange 1 durch den Innenraum der beiden Federn 11 und 12 hindurch geschoben werden kann.

In der in Figur 1 gezeigten Anlieferungsstellung ist also das Ausgleichselement mit der Anbindung 6 von der Zug- und Druckstange 1 getrennt. Der Monteur erfaßt das Ausgleichselement und verdreht das Einstellstück 13 um die Längsachse des Gehäuses 10, wodurch sich die Federn 11 und 12 weiten. Er kann dann die Zug- und Druckstange 1 in den geweiteten Hohlraum bis zur gewünschten Tiefe einführen. Ist die Länge auf das vorgesehene Maß eingestellt, läßt er das Einstellstück 13 los und die Federn 11 und 12 klemmen durch Reduzierung ihres Innendurchmessers die Zug- und Druckstange in der gewünschten Lage fest.

Wie weiterhin aus den Figuren 1 bis 4 zu entnehmen ist, hat diese Ausführungsform ein zusätzliches Merkmal, das zur Verstärkung der Klemmkraft bei Zug- und Druckbelastung führt. Es sind nämlich an dem Klemmelementen 14 und 15 Anlaufschrägen 16 für die Enden der Federn 11 und 12 vorgesehen.

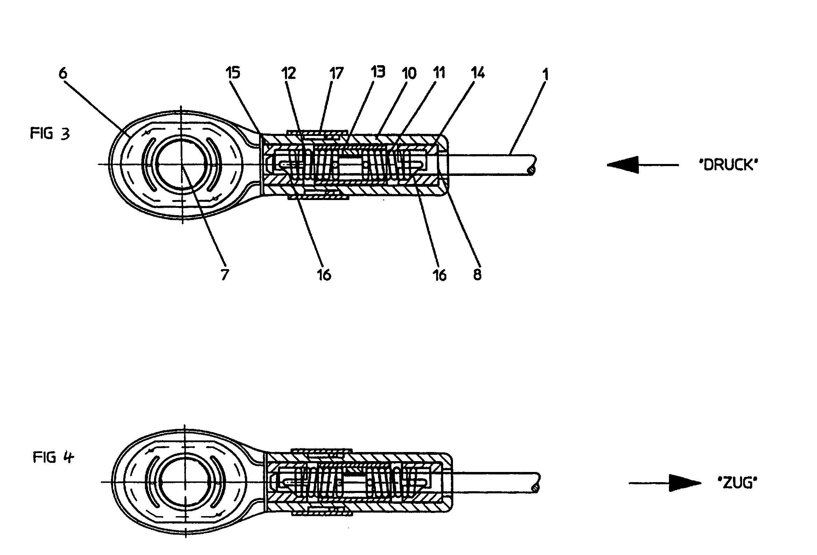

In Figur 3 ist dargestellt, wie das erfindungsgemäße Ausgleichselement auf eine Druckbelastung reagiert. In diesem Fall wird die Feder 12 gegen die Anlaufschräge 16 gedrückt und verringert dadurch ihren Durchmesser. Hierdurch wird eine erhöhte Klemmung mit der Zug- und Druckstange 1 bewirkt, wodurch diese noch fester in der gewünschten Position gehalten wird.

In Figur 4 ist dargestellt, wie bei Zugbelastung die an dem Klemmelement 14 gebildete Anlaufschräge 16 bewirkt, dass die zugeordnete Feder 11 gegen die Anlaufschräge 16 gezogen wird und dadurch ihren Durchmesser im Hinblick auf eine größere Haltekraft der Zug- und Druckstange 1 reduziert.

In den Ausführungen der Figuren 1 bis 4 ist zusätzlich eine Sicherungshülse 17 vorgesehen, welche in Arbeitsstellung ein unbeabsichtigtes Verdrehen des Einstellstückes 13 verhindert. In der anderen Stellung der Sicherungshülse 17 kann das Einstellstück 13 verdreht werden, so dass bei aufgeweiteten Federn 11 und 12 die Zug- und Druckstange 1 eingeschoben oder entfernt oder in ihrer Position korrigiert werden kann.

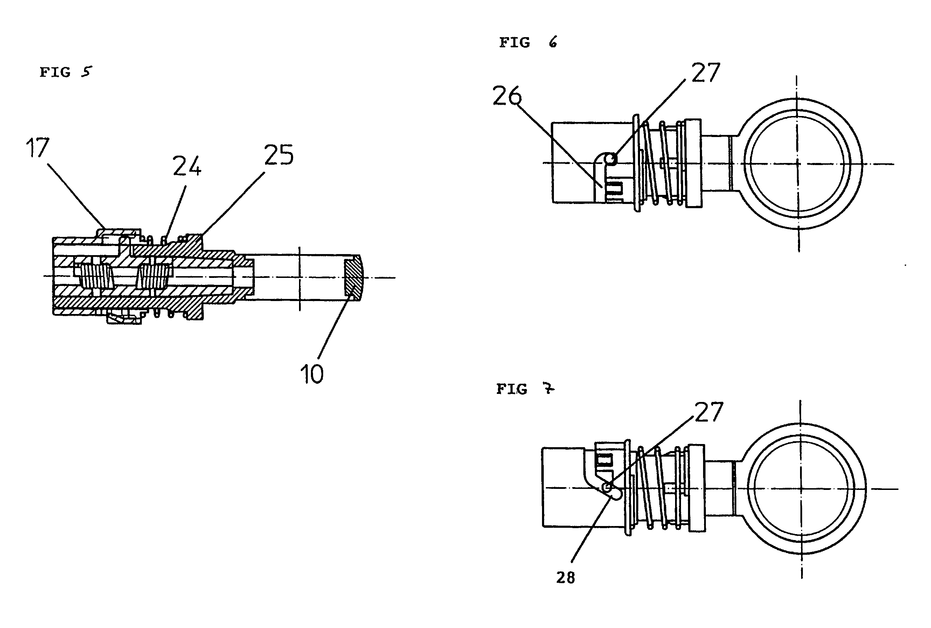

In den Figuren 5 bis 7 ist eine Abwandlung des Ausgleichselementes gemäß Figuren 1 bis 4 dargestellt. Hierbei ist zwischen der Sicherungshülse 17 und einer Ringschulter 25 des Gehäuses 10 des Ausgleichselementes eine Druckfeder 24 eingesetzt. In der Wandung der Sicherungshülse 17 befindet sich ein Steuerschlitz 26, in welchen ein an dem Gehäuse 10 radial nach außen weisender Steuernocken 27 eingreift. Der Steuerschlitz 26 ist derart geformt, dass eine Parkposition der Sicherungshülse 17 einstellbar ist, wie dies in Figur 7 dargestellt ist, und durch Verdrehen der Sicherungshülse 17 eine Sicherungsstellung, wie dies in Figur 6 gezeigt ist. Befindet sich das Ausgleichselement bzw. der Steuernocken 27 in der Parkposition, ist eine beliebige Einstellung der Zug- und Druckstange 1 ermöglicht, wobei die Feder 24 gespannt ist. Durch axiales Vorschieben und/oder Verdrehen der Sicherungshülse 17 gelangt der Steuernocken 27 aus der Parkposition, so dass er, unterstützt durch die Druckfeder 24, über die aus Figur 7 zu ersehene Schräge des Steuerschlitzes 26 selbsttätig in die Sicherungsstellung übergeht und vermittels der Feder 24 in dieser Stellung gehalten ist. Die Zug- und Druckstange 1 ist damit arretiert.

### Bezugszeichenliste

- 1 -: Zug- und Druckstange
- 2 -: Einstellschraube
- 3 -: Verschlußhülse
- 4 -: Feder
- 5 -: Aufnahme
- 6 -: Anbindung
- 7 -: Ausnehmung
- 8 -: Einsteckkanal
- 9 -: Käfig
- 10 -: Gehäuse
- 11 -: Feder
- 12 -: Feder
- 13 -: Einstellstück
- 14 -: Klemmelement
- 15 -: Klemmelement
- 16 -: Anlaufschräge
- 17 -: Sicherungshülse
- 18 -: Klemmelement
- 19 -: Feder
- 20 -: Aufnahme
- 21 -: Rolle
- 22 -: Gehäuse
- 23 -: Sicherung
- 24 -: Feder
- 25 -: Schulter
- 26 -: Steuerschlitz
- 27 -: Steuernocken
- 28 -: Schräge

## Patentansprüche

1. Ausgleichsvorrichtung für eine Zug- und Druckstange (1) zur manuellen Einstellung eines Längenausgleichs in einem Kraftfahrzeug, wobei die Zug- und Druckstange (1) über ein Einstellelement in einem Gehäuse (10) der Ausgleichsvorrichtung lösbar oder feststellbar ist, das Einstellelement als in dem Gehäuse (10) gehaltenes Schraubenfedermittel ausgebildet und in dem Schraubenfedermittel die Zug- oder Druckstange (1) aufgenommen ist, wobei der Innendurchmesser des Schraubenfedermittels kleiner als der Außendurchmesser der Zug- und Druckstange (1) ist, so dass das Schraubenfedermittel die Zug- und Druckstange (1) unter Wirkung der Federkraft festklemmt, wobei das Schraubenfedermittel zwei gewickelte Schraubenfedern (11, 12) aufweist und ein Einstellstück (13) vorgesehen ist, welches mit den beiden Schraubenfedern (11, 12) verbunden und zum Aufspreizen der Schraubenfedern (11, 12) ausgebildet ist, **dadurch gekennzeichnet, dass** die beiden Schraubenfedern (11,12) gegenläufig gewickelt sind.

2. Ausgleichsvorrichtung nach Anspruch 1, **dadurch gekennzeichnet, dass** zwei Klemmelemente (14, 15) vorgesehen sind, die den Schraubenfedern (11, 12) zugewandte Anlaufschrägen (16) aufweisen.

3. Ausgleichsvorrichtung nach Anspruch 1 oder 2, **dadurch gekennzeichnet**, die jeweils inneren Federenden der Schraubenfedern (11, 12) an dem Einstellstück (13) angelenkt sind.

4. Ausgleichsvorrichtung nach einem der Ansprüche 2 oder 3, **dadurch gekennzeichnet, dass** die jeweils äußeren Federenden der Schraubenfedern (11, 12) an jeweils einem Klemmelement (14, 15) gehalten und die Klemmelemente (14, 15) drehfest innerhalb des Gehäuses (10) aufgenommen sind.

5. Ausgleichsvorrichtung nach einem der vorhergehenden Ansprüche, **dadurch gekennzeichnet, dass** das Einstellstück (13) mittels eines Hebels oder Knopfs verdrehbar ist.

6. Ausgleichsvorrichtung nach einem der vorhergehenden Ansprüche, **gekennzeichnet durch** eine federbelastete Sicherungshülse (17), welche in einer Arbeitsstellung ein unbeabsichtigtes Verdrehen des Einstellstücks (13) verhindert.

7. Ausgleichsvorrichtung nach Anspruch 6, **dadurch gekennzeichnet, dass** zwischen Sicherungshülse (17) und einer Ringschulter (25) des Gehäuses (10) eine Druckfeder (24) eingesetzt ist.

8. Ausgleichsvorrichtung nach Anspruch 7, **dadurch gekennzeichnet, dass** eine Wandung der Sicherungshülse (17) einen Steuerschlitz (26) aufweist, in welchem ein an dem Gehäuse (10) radial nach außen weisender Steuernocken (27) eingreift.

9. Ausgleichsvorrichtung nach Anspruch 8, **dadurch gekennzeichnet, dass** der Steuerschlitz (26) eine Einstellung der Sicherungshülse (17) in eine Parkstellung und eine Sicherungsstellung zulässt, wobei die Zug- und Druckstange (1) in der Parkstellung frei verstellbar und in der Sicherungsstellung arretiert ist.

10. Ausgleichsvorrichtung nach Anspruch 8 oder 9, **dadurch gekennzeichnet, dass** der Steuerschlitz (26) einen derartigen Verlauf aufweist, dass eine Fixierung der Sicherungshülse (17) in einer Stellung zur Verstellung der Zug- und Druckstange (1) ermöglicht und vermittels der Federkraft in eine zweite Stellung zur Arretierung und Sicherung der Zug- und Druckstange (1) in der eingestellten Position gelangt.

## Claims

1. Compensating device for a tension and compression rod (1) for the manual setting of a length-compensating means in a motor vehicle, it being possible to release or secure the tension and compression rod (1) in a housing (10) of the compensating device via a setting element, the setting element being designed as a helical spring means held in the housing (10) and the tension or compression rod (1) being accommodated in the helical spring means, with the inside diameter of the helical spring means being smaller than the outside diameter of the tension and compression rod (1), with the result that the helical spring means securely clamps the tension and compression rod (1) under the action of the spring force, with the helical spring means having two coiled helical springs (11, 12) and a setting component (13) being provided which is connected to the two helical springs (11, 12) and is designed for expanding the helical springs (11, 12), **characterized in that** the two helical springs (11, 12) are coiled in opposite directions.

2. Compensating device according to Claim 1, **characterized in that** two clamping elements (14, 15) having run-on slopes (16) facing the helical springs (11, 12) are provided.

3. Compensating device according to Claim 1 or 2, **characterized in that** the respectively inner spring ends of the helical springs (11, 12) are articulated on the setting component (13).

4. Compensating device according to either of Claims 2 and 3, **characterized in that** the respectively outer spring ends of the helical springs (11, 12) are held on a respective clamping element (14, 15) and the clamping elements (14, 15) are accommodated in a rotationally fixed manner within the housing (10).

5. Compensating device according to one of the preceding claims, **characterized in that** the setting component (13) can be rotated by means of a lever or button.

6. Compensating device according to one of the preceding claims, **characterized by** a spring-loaded securing sleeve (17) which, in a working position, prevents unintentional rotation of the setting component (13).

7. Compensating device according to Claim 6, **characterized in that** a compression spring (24) is inserted between the securing sleeve (17) and an annular shoulder (25) of the housing (10).

8. Compensating device according to Claim 7, **characterized in that** one wall of the securing sleeve (17) has a control slot (26) in which a control cam (27) pointing radially outwards on the housing (10) engages.

9. Compensating device according to Claim 8, **characterized in that** the control slot (26) permits setting the securing sleeve (17) into a parking position and a securing position, the tension and compression rod (1) being freely adjustable in the parking position and being locked in the securing position.

10. Compensating device according to Claim 8 or 9, **characterized in that** the control slot (26) has such a profile that the securing sleeve (17) can be fixed in one position for the adjustment of the tension and compression rod (1) and, by means of the spring force, passes into a second position for locking and securing the tension and compression rod (1) in the set position.

## Revendications

1. Dispositif de compensation pour une barre de traction et de pression (1) destinée au réglage manuel d'une compensation en longueur dans un véhicule automobile, la barre de traction et de pression (1) pouvant être libérée ou bloquée par le biais d'un élément de réglage dans un boîtier (10) du dispositif de compensation, l'élément de réglage étant réalisé sous la forme d'un moyen à ressort à boudin maintenu dans le boîtier (10) et la barre de traction ou de pression (1) étant logée dans le moyen à ressort à boudin, le diamètre intérieur du moyen à ressort à boudin étant inférieur au diamètre extérieur de la barre de traction et de pression (1) de manière à ce que le moyen à ressort à boudin serre la barre de traction et de pression (1) sous l'effet de la force du ressort, le moyen à ressort à boudin présentant deux ressorts à boudin (11, 12) enroulés en sens inverse et un élément de réglage (13) étant prévu, lequel est relié avec les deux ressorts à boudin (11, 12) et configuré pour écarter les ressorts à boudin (11, 12), **caractérisé en ce que** les deux ressorts à boudin (11, 12) sont enroulés en sens inverse.

2. Dispositif de compensation selon la revendication 1, **caractérisé en ce que** sont prévus deux éléments de serrage (14, 15) qui présentent des biseaux d'amorçage (16) dirigés vers les ressorts à boudin (11, 12).

3. Dispositif de compensation selon la revendication 1 ou 2, **caractérisé en ce que** les extrémités de ressort intérieures des ressorts à boudin (11, 12) sont fixées de manière articulée à l'élément de réglage (13).

4. Dispositif de compensation selon l'une des revendications 2 ou 3, **caractérisé en ce que** les extrémités de ressort extérieures des ressorts à boudin (11, 12) sont à chaque fois maintenues à un élément de serrage (14, 15) et les éléments de serrage (14, 15) sont logés dans le boîtier (10) de manière à ne pas pouvoir tourner.

5. Dispositif de compensation selon l'une des revendications précédentes, **caractérisé en ce que** l'élément de réglage (13) peut être tourné à l'aide d'un levier ou d'un bouton.

6. Dispositif de compensation selon l'une des revendications précédentes, **caractérisé par** une douille de blocage à ressort (17) qui, en position de travail, empêche une rotation involontaire de l'élément de réglage (13).

7. Dispositif de compensation selon la revendication 6, **caractérisé en ce qu'**un ressort de compression (24) est utilisé entre la douille dé blocage (17) et un épaulement annulaire (25) du boîtier (10).

8. Dispositif de compensation selon la revendication 7, **caractérisé en ce qu'**une paroi de la douille de blocage (17) présente une fente de commande (26) dans laquelle pénètre une came de commande (27) dirigée vers l'extérieur dans le sens radial sur le boîtier (10).

9. Dispositif de compensation selon la revendication 8, **caractérisé en ce que** la fente de commande (26) permet un réglage de la douille de blocage (17) dans une position de stationnement et une position de blocage, la barre de traction et de pression (1) pouvant être positionnée librement en position de stationnement et étant bloquée en position de blocage.

10. Dispositif de compensation selon la revendication 8 ou 9, **caractérisé en ce que** la fente de commande (26) présente un profil tel qu'il est possible de bloquer la douille de blocage (17) dans une position permettant de régler la position de la barre de traction et de pression (1) et passe dans une deuxième position à l'aide de la force du ressort pour bloquer et sécuriser la barre de traction et de pression (1) dans la position réglée.
